# FASCICULE DE BREVET EUROPEEN

(11) **EP 4 315 202 B1**
(45) Date de publication et mention de la délivrance du brevet: **02.10.2024**
(21) Numéro de dépôt: 22734869.5
(22) Date de dépôt: 06.06.2022
(51) Int. Cl.: G06Q 10/06, G06F 30/20, G06Q 10/04, G06Q 50/08

(54) **SYSTÈME ET PROCÉDÉ IMPLÉMENTÉS PAR ORDINATEUR POUR PRÉDIRE AU MOINS UN PARAMÈTRE DE VARIATION D'UN SCORE DE PRESSION ENVIRONNEMENTALE ASSOCIÉ À AU MOINS UNE STRUCTURE À CONSTRUIRE SUR AU MOINS UNE ZONE GÉOGRAPHIQUE PRÉDÉTERMINÉE DE LA TERRE**
COMPUTERIMPLEMENTIERTES VERFAHREN UND SYSTEM ZUR VORHERSAGE VON MINDESTENS EINEM VARIATIONSPARAMETER EINES UMWELTDRUCKWERTES, DER MINDESTENS EINER IN MINDESTENS EINER VORBESTIMMTEN GEOGRAPHISCHEN REGION DER ERDE ZU BAUENDEN STRUKTUR ZUSAMMENHÄNGT
COMPUTER-IMPLEMENTED METHOD AND SYSTEM FOR PREDICTING AT LEAST ONE PARAMETER OF VARIATION IN AN ENVIRONMENTAL-PRESSURE SCORE ASSOCIATED WITH AT LEAST ONE STRUCTURE TO BE CONSTRUCTED IN AT LEAST ONE PREDETERMINED GEOGRAPHICAL REGION OF THE EARTH

(30) Priorité: 04.06.2021 FR 2105911
(43) Date de publication de la demande: 07.02.2024
(73) Titulaire: MURMURATION, 31150 Bruguières (FR)
(72) Inventeur: HABIB, Tarek, 31150 Bruguières (FR)
(74) Mandataire: A.P.I. Conseil
(86) Numéro de dépôt international: PCT/EP2022/065302
(87) Numéro de publication internationale: WO 2022/254045

(56) Documents cités:
- CN-A- 110 135 649
- CN-A- 111 047 695
- US-A1- 2014 214 472
- US-A1- 2015 178 633
- LEI SONG: "Spatio-temporal Incremental Data Modelling for Multidimensional Environmental Analysis Doc Thesis", 31 March 2014 (2014-03-31), pages 1 - 195, XP055639810, Retrieved from the Internet <URL:https://pdfs.semanticscholar.org/f50d/abe6ee9fc329b0f5c738c5120f136bac67b0.pdf> [retrieved on 20191107]

## Description

### Domaine technique

L'invention concerne le domaine de la quantification environnementale. En particulier, elle concerne un système et un procédé implémentés par ordinateur pour prédire, sur une période de prédiction prédéterminée, au moins un paramètre de variation d'un score de pression environnementale associé à au moins une structure à construire sur au moins une zone géographique prédéterminée de la Terre. Elle concerne également un système et un procédé pour l'entrainement d'un modèle d'apprentissage machine qui est destiné à prédire, sur une période de prédiction prédéterminée, au moins un paramètre de variation de score qui correspond à une variation d'au moins un score de pression environnementale.

### Technique antérieure

L'accroissement de l'urbanisation et du tourisme sont une caractéristique essentielle des sociétés industrielles.

Or, leurs effets négatifs sur l'environnement sont très proches notamment lorsque l'on considère la typologie d'activités humaines et leur incidence sur l'artificialisation des sols et la biodiversité, les infrastructures routières et moyens de transport et leur incidence sur la qualité de l'air ou encore la sur-fréquentation de lieux et leur incidence sur le stress hydrique.

Ainsi, l'urbanisation et le tourisme portent une responsabilité majeure et commune dans la dégradation de l'environnement.

La prise de conscience de cette problématique rend nécessaire une meilleure connaissance de leur impact sur l'environnement.

En particulier, on peut souhaiter disposer d'outils objectifs et reproductibles pour évaluer la pertinence de réaliser de nouvelles constructions sur une zone géographique prédéterminée de la Terre, au vu de leurs impacts futurs sur l'environnement.

Ainsi, il existe un besoin pour quantifier l'impact environnemental lié à la pertinence de réaliser de nouvelles constructions sur une zone géographique prédéterminée de la Terre.

### Résumé de l'invention

L'invention vise à résoudre, au moins partiellement, ce besoin.

L'invention vise un procédé implémenté par ordinateur de prédiction, sur une période de prédiction prédéterminée, d'au moins un paramètre de variation d'un score de pression environnementale associé l'introduction d'à au moins une structure à construire sur au moins une zone géographique prédéterminée de la Terre, le paramètre de variation étant représentatif de l'impact de la structure à construire sur un ou plusieurs paramètres environnementaux qui caractérisent le milieu dans laquelle se trouve la zone géographique prédéterminée de la Terre.

En particulier, le procédé implémenté par ordinateur de prédiction comprend :
- une première étape d'obtention d'une pluralité de données géoréférencées qui est représentative de la surface au sol occupée par la structure à construire, les données géoréférencées provenant de sources différentes,
- une étape d'extraction de contours, à partir de la pluralité de données géoréférencées, d'un contour extérieur géoréférencé de la structure à construire,
- une deuxième étape d'obtention d'au moins un paramètre mesurable qui est associé à la structure à construire,
- une étape de formation d'un vecteur qui comprend le contour extérieur géoréférencé de la structure à construire et le paramètre mesurable qui est associé à la structure à construire, et
- une étape de prédiction, à partir de la période de prédiction prédéterminée, du vecteur et d'au moins un modèle d'apprentissage machine qui est entrainé, dit modèle entrainé, pour prédire le paramètre de variation de score de pression environnementale sur la période de prédiction prédéterminée,.

Dans un premier mode de réalisation, le procédé implémenté par ordinateur de prédiction comprend en outre :
- une étape de détermination ou de sélection d'au moins une typologie de structure à construire qui est choisie parmi une pluralité de typologies prédéterminées de structure à construire et de toutes combinaisons de celles-ci, et
- une première étape de recherche, à partir de la typologie de structure à construire, d'au moins une entrée d'une première table de sélection qui associe une typologie de structure à construire à au moins un modèle entrainé pour prédire le score de pression environnementale, et
dans lequel, l'étape de prédiction comprend l'utilisation du ou des modèles entrainés pour prédire le score de pression environnementale qui sont associés à la ou les entrées de la première table de sélection.

Dans un deuxième mode de réalisation, le procédé implémenté par ordinateur de prédiction comprend en outre :
- une deuxième étape de recherche, à partir du paramètre mesurable qui est associé à la structure à construire, d'au moins une entrée d'une deuxième table de sélection qui associe un paramètre mesurable qui est associé à la structure à construire à au moins un modèle entrainé pour prédire le score de pression environnementale, et
dans lequel, l'étape de prédiction comprend l'utilisation du ou des modèles entrainés pour prédire le score de pression environnementale qui sont associés à la ou les entrées de la deuxième table de sélection.

Dans un troisième mode de réalisation, le procédé implémenté par ordinateur de prédiction comprend en outre :
- une troisième étape d'obtention d'au moins un premier score de pression environnementale associé à la zone géographique prédéterminée de la Terre, et
- une étape de calcul d'au moins un deuxième score de pression environnementale à partir du premier score de pression environnementale et du paramètre de variation de score.

Dans une première mise en oeuvre particulière, la zone géographique prédéterminée de la Terre présente un rayon dont une origine coïncide avec le barycentre des données géoréférencées qui définissent le contour extérieur géoréférencé de la structure à construire.

Dans une deuxième mise en oeuvre particulière, le paramètre mesurable qui est associé à la structure à construire décrit une propriété qui est choisie parmi : une surface, un effectif, une consommation, une production, une émission et toutes combinaisons de ceux-ci.

L'invention vise aussi un système pour prédire, sur une période de prédiction prédéterminée, au moins un paramètre de variation d'un score de pression environnementale associé l'introduction d'à au moins une structure à construire sur au moins une zone géographique prédéterminée de la Terre, le paramètre de variation étant représentatif de l'impact de la structure à construire sur un ou plusieurs paramètres environnementaux qui caractérisent le milieu dans laquelle se trouve la zone géographique prédéterminée de la Terre.

En particulier, le système comprend :
- au moins un dispositif de stockage de données configuré pour stocker des instructions pour prédire le paramètre de variation de score de pression environnementale, et
- au moins un processeur configuré pour exécuter les instructions pour mettre en oeuvre un procédé implémenté par ordinateur de prédiction selon l'invention.

L'invention vise aussi un procédé implémenté par ordinateur d'entrainement d'un modèle d'apprentissage machine qui est destiné à prédire, sur une période de prédiction prédéterminée, au moins un paramètre de variation de score de pression environnementale associé à l'introduction d'au moins une structure à construire sur au moins une zone géographique prédéterminée de la Terre, le paramètre de variation de score étant représentatif de l'impact de la structure à construire sur un ou plusieurs paramètres environnementaux qui caractérisent le milieu dans laquelle se trouve la zone géographique prédéterminée de la Terre, la zone géographique prédéterminée de la Terre comprenant une pluralité de positions géographiques.

En particulier, le procédé implémenté par ordinateur d'entrainement comprend :
- une première étape d'obtention d'un historique de données géoréférencées qui couvrent tout ou partie de la zone géographique prédéterminée de la Terre, respectivement obtenues à des premières périodes d'historique, les données géoréférencées provenant de sources différentes,
- une étape de recherche, à partir de l'historique de données géoréférencées, de la première donnée géoréférencée à laquelle apparait pour la première fois au moins une structure construite, dite donnée géoréférencée de référence,
- une étape d'extraction de contours, à partir de la donnée géoréférencée de référence, d'un contour extérieur géoréférencé de la structure à construire,
- une deuxième étape d'obtention d'au moins un paramètre mesurable qui est associé à la structure à construire,
- une troisième étape d'obtention, pour tout ou partie de la pluralité de positions géographiques, d'un premier historique de valeurs antérieures de paramètres environnementaux respectivement obtenues à au moins une deuxième période d'historique inférieure ou égale à la première période d'historique associée à la donnée géoréférencée de référence,
- une quatrième étape de calcul, pour tout ou partie de la deuxième période d'historique, d'au moins un premier score de pression environnementale à partir de tout ou partie de l'historique de valeurs antérieures de paramètres environnementaux,
- une quatrième étape d'obtention, pour tout ou partie de la pluralité de positions géographiques, d'un deuxième historique de valeurs antérieures de paramètres environnementaux respectivement obtenues à au moins une troisième période d'historique supérieure ou égale à la première période d'historique associée à la donnée géoréférencée de référence,
- une troisième étape de calcul, pour tout ou partie de la troisième période d'historique, d'au moins un deuxième score de pression environnementale à partir de tout ou partie de l'historique de valeurs antérieures de paramètres environnementaux,
- une cinquième étape de calcul, d'au moins paramètre de variation de score qui correspond à une variation entre le premier score de pression environnementale et le deuxième score de pression environnementale sur la période de prédiction prédéterminée,
- une première étape de formation d'un premier vecteur qui comprend le contour extérieur géoréférencé de la structure à construire et le paramètre mesurable qui est associé à la structure à construire,
- une deuxième étape de formation d'un deuxième vecteur qui comprend le paramètre de variation de score, et
- une étape d'entrainement d'un modèle d'apprentissage machine via un apprentissage automatique qui comprend une entrée et une sortie, l'entrée étant configurée pour recevoir le premier vecteur et la sortie étant configurée pour recevoir le deuxième vecteur.

Dans un premier mode de réalisation, le procédé implémenté par ordinateur d'entrainement comprend en outre :
- une étape de détermination ou de sélection d'au moins une typologie de structure à construire qui est choisie parmi une pluralité de typologies prédéterminées de structure à construire et de toutes combinaisons de celles-ci, et
- une première étape d'insertion de la typologie de structure à construire dans une première table de sélection qui associe une typologie de structure à construire à au moins un modèle d'apprentissage machine qui est entrainé pour prédire le score de pression environnementale.

Dans un deuxième mode de réalisation, le procédé implémenté par ordinateur d'entrainement comprend en outre :
- une deuxième étape d'insertion du paramètre mesurable qui est associé à la structure à construire dans une deuxième table de sélection qui associe un paramètre mesurable qui est associé à la structure à construire à au moins un modèle d'apprentissage machine qui est entrainé pour prédire le score de pression environnementale.

Dans un troisième mode de réalisation, le procédé implémenté par ordinateur d'entrainement comprend en outre une étape de dérivation de l'historique de données géoréférencées à partir d'une pluralité d'éléments choisis parmi : un capteur in situ, une image aérienne, une image satellite, des plans ou des schémas directeurs de la structure à construire, et toutes combinaisons de ceux-ci.

Dans une première mise en oeuvre particulière, le paramètre mesurable qui est associé à la structure à construire décrit une propriété qui est choisie parmi : une surface, un effectif, une consommation, une production, une émission et toutes combinaisons de ceux-ci.

Dans une deuxième mise en oeuvre particulière, les paramètres environnementaux sont choisis parmi : l'air, l'eau, l'urbanisation, la biodiversité et toutes combinaisons de ceux-ci.

Dans une troisième mise en oeuvre particulière, l'apprentissage automatique comprend un algorithme d'entrainement qui est choisi parmi : une régression des moindres carrés partiels, une régression linéaire, un réseau neuronal, un arbre de décision, un algorithme génétique, une programmation génétique, une méthode des k plus proches voisins, un réseau à fonctions de base radiales, une fonction aléatoire, une forêt, une machine à vecteurs de support et un apprentissage profond.

L'invention vise aussi un système pour l'entrainement d'un modèle d'apprentissage machine qui est destiné à prédire, sur une période de prédiction prédéterminée, au moins un paramètre de variation de score de pression environnementale associé l'introduction d'à au moins une structure à construire sur au moins une zone géographique prédéterminée de la Terre, le paramètre de variation de score étant représentatif de l'impact de la structure à construire sur un ou plusieurs paramètres environnementaux qui caractérisent le milieu dans laquelle se trouve la zone géographique prédéterminée de la Terre, la zone géographique prédéterminée de la Terre comprenant une pluralité de positions géographiques.

En particulier, le système comprend :
- au moins un dispositif de stockage de données configuré pour stocker des instructions pour l'entrainement d'un modèle d'apprentissage machine ; et
- au moins un processeur configuré pour exécuter les instructions pour mettre en oeuvre un procédé implémenté par ordinateur d'entrainement selon l'invention.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un mode de réalisation d'un procédé de prédiction selon l'invention.
[Fig. 2] La figure 2 représente un mode de réalisation d'un système pour la mise en oeuvre du procédé de la figure 1.
[Fig. 3] La figure 3 représente un mode de réalisation d'un procédé d'entrainement selon l'invention.
[Fig. 4] La figure 4 représente un mode de réalisation d'un système pour la mise en oeuvre du procédé de la figure 3.

Les figures ne respectent pas nécessairement les échelles, notamment en épaisseur, et ce à des fins d'illustration.

Sur les différentes figures, les traits et flèches en pointillés indiquent des éléments, des étapes et des enchainements facultatifs ou optionnels.

### Description des modes de réalisation

L'un des objectifs de cette invention est de fournir un outil objectif et reproductible pour évaluer la pertinence de réaliser de nouvelles constructions sur une zone géographique prédéterminée de la Terre.

Pour cela, les inventeurs proposent d'entrainer un modèle d'apprentissage machine, à partir de données d'historique pour prédire un paramètre de variation de score qui correspond à une variation d'au moins un score de pression environnementale.

En pratique, le paramètre de variation de score est représentatif de l'impact environnemental d'une structure à construire sur au moins une zone géographique prédéterminée de la Terre.

Par la suite, on peut utiliser le modèle d'apprentissage machine qui est entrainé pour évaluer la pertinence de réaliser une structure à construire sur une zone géographique prédéterminée de la Terre, selon son impact futur.

Ainsi, l'invention concerne un procédé de prédiction de l'impact environnemental d'au moins une structure à construire sur au moins une zone géographique prédéterminée de la Terre.

Par conséquent, l'invention couvre également la prédiction de l'impact environnemental pour une ou plusieurs structures à construire sur une ou plusieurs zones géographiques prédéterminées de la Terre.

Dans un exemple, la structure à construire est un édifice ou un ouvrage d'art, tel qu'un immeuble, un pont, des fondations, une route, un tunnel, un barrage ou tout autre ouvrage d'art.

Toutefois, selon les besoins, on pourra envisager d'appliquer le procédé selon l'invention à d'autres structures à construire, et ce, sans nécessiter de modifications substantielles de l'invention.

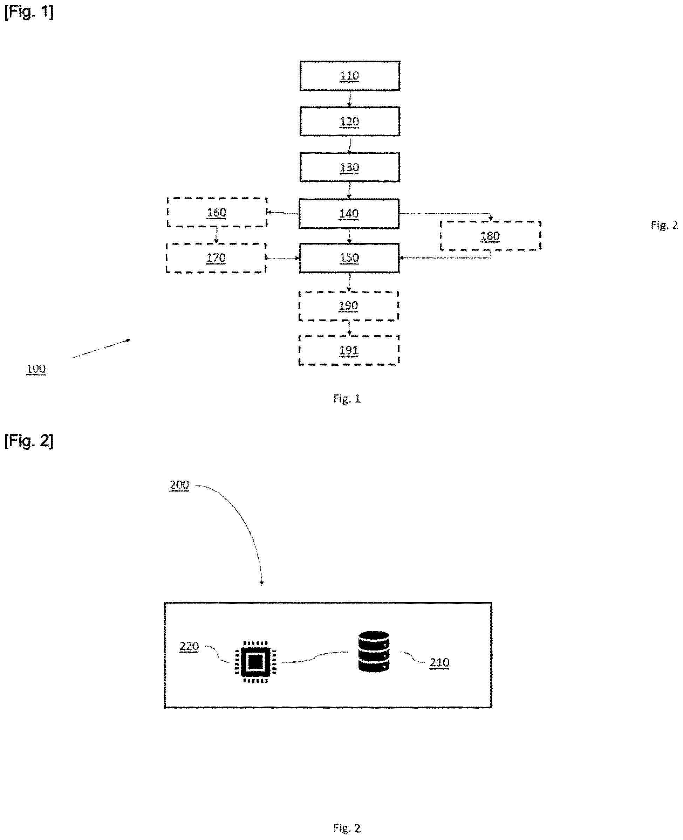

Tout d'abord, comme illustré dans l'exemple de la figure 1, le procédé de prédiction 100 comprend une première étape d'obtention 110 d'une pluralité de données géoréférencées qui est représentative de la surface au sol occupée par la structure à construire.

On entend par données géoréférencées toute donnée numérique caractérisée par des attributs géographiques qui permet de le localiser dans l'espace sur la Terre.

De manière classique, les données géoréférencées peuvent provenir de sources différentes..

Ainsi, dans un mode de réalisation particulier de l'invention, on obtient la pluralité de données géoréférencées à partir d'au moins une source de données géoréférencées choisie parmi : un capteur in situ, une image aérienne, une image satellite, des plans ou des schémas directeurs de la structure à construire, et toutes combinaisons de ceux-ci.

Toutefois, selon les ressources disponibles, on pourra envisager d'obtenir la pluralité de données géoréférencées à partir d'autres sources de données géoréférencées, et ce, sans nécessiter de modifications substantielles de l'invention.

Ensuite, le procédé de prédiction 100 comprend une étape d'extraction de contours 120, à partir de la pluralité de données géoréférencées, d'un contour extérieur géoréférencé de la structure à construire.

Dans un exemple, on réalise l'étape d'extraction de contours 120 au moyen d'au moins un algorithme d'extraction de contours de type connu.

Ainsi, pour la détection de contours dans une image, on pourra utiliser un algorithme choisi parmi : modèle de contour actif, Canny-Deriche, Robers, Kirsch, Marr-Hildreth, Shen-Castan et toutes combinaisons de ceux-ci.

Toutefois, selon les besoins, on pourra envisager d'utiliser d'autres algorithmes d'extraction de contours, et ce, sans nécessiter de modifications substantielles de l'invention.

Puis, le procédé de prédiction 100 comprend une deuxième étape d'obtention 130 d'au moins un paramètre mesurable qui est associé à la structure à construire.

Dans un mode de réalisation particulier de l'invention, le paramètre mesurable qui est associé à la structure à construire décrit une propriété qui est choisie parmi : une surface, une morphologie, un effectif, une consommation, une production, une émission et toutes combinaisons de ceux-ci.

Toutefois, selon les besoins, on pourra envisager d'utiliser d'autres paramètres connus et/ou mesurables qui sont associés à la structure à construire, et ce, sans nécessiter de modifications substantielles de l'invention.

Dans un premier exemple, lorsque le paramètre mesurable qui est associé à la structure à construire est une surface, celle-ci pourra être choisie parmi : une surface utile, une surface de plancher de construction, une surface de vente, une surface commerciale, une emprise au sol, une surface habitable, une surface réservée au public, et toutes combinaisons de celles-ci.

Dans un deuxième exemple, lorsque le paramètre mesurable qui est associé à la structure à construire est une morphologie, celui-ci pourra être choisi parmi : une hauteur, un nombre d'étages, un effet de masque lié à l'orientation, la mitoyenneté et toutes combinaisons de celles-ci.

Dans un troisième exemple, lorsque le paramètre mesurable qui est associé à la structure à construire est un effectif, celui-ci pourra être choisi parmi : un nombre d'individus accueillis ou qui peuvent être accueillis, un nombre d'individus occupants de jour et/ou de nuit, un nombre d'individus assis et/ou debout, un nombre d'individus présents en permanence, un nombre d'individus qui circule en véhicule pour se rendre à la structure à construire et toutes combinaisons de celles-ci.

Dans un quatrième exemple, lorsque le paramètre mesurable qui est associé à la structure à construire est une consommation, celle-ci pourra être choisie parmi :
une consommation d'eau, une consommation d'énergie (p. ex. énergie électrique, énergie hydraulique, énergie pneumatique, énergie thermique,
énergie électromagnétique, énergie nucléaire ou énergie vibratoire) et toutes combinaisons de celles-ci.

Dans un cinquième exemple, lorsque le paramètre mesurable qui est associé à la structure à construire est une production, celle-ci pourra être choisie parmi : une énergie électrique, une énergie hydraulique, une énergie pneumatique, une énergie thermique, une énergie électromagnétique, une énergie nucléaire et toutes combinaisons de celles-ci.

Dans un sixième exemple, lorsque le paramètre mesurable qui est associé à la structure à construire est une émission, celle-ci pourra être un taux d'émissions de gaz à effet de serre.

Par la suite, le procédé de prédiction 100 comprend une étape de formation 140 d'un vecteur qui comprend le contour extérieur géoréférencé de la structure à construire et le paramètre mesurable qui est associé à la structure à construire.

Dans l'invention, on entend par vecteur une structure de données qui est configurée pour stocker un ensemble ordonné d'éléments qui sont chacun repérés par un indice. En pratique, on définit un vecteur par le nombre d'éléments qui le composent ainsi que le type et la taille de ses éléments.

Ainsi, une liste chainée peut également être considérée comme un vecteur au sens de l'invention.

Enfin, le procédé de prédiction 100 comprend une étape de prédiction 150, à partir du vecteur et d'au moins un modèle d'apprentissage machine qui est entrainé, dit modèle entrainé, pour prédire au moins un paramètre de variation de score qui correspond à une variation d'au moins un score de pression environnementale.

Dans l'invention, le score de pression environnemental est un indicateur qui caractérise l'état environnemental d'un point géographique ou d'une zone géographique de la Terre à un moment donné.

Par exemple, on pourra choisir le score de pression environnemental parmi les indicateurs connus qui caractérisent l'état environnemental d'un point géographique ou d'une zone géographique de la Terre à partir de paramètres environnementaux choisis parmi : l'air, l'eau, l'urbanisation, la biodiversité et toutes combinaisons de ceux-ci.

Toutefois, selon les ressources disponibles, on pourra choisir le score de pression environnemental de manière qu'il prenne également en compte d'autres paramètres, comme des paramètres économiques et sociaux (p. ex. démographie, niveau instruction, niveau de vie, espérance de vie), et ce, sans nécessiter de modifications substantielles de l'invention.

Dans l'invention, le paramètre de variation de score exprime la variation du score de pression environnemental à la suite de l'introduction d'une structure à construire dans la zone géographique prédéterminée de la Terre.

En d'autres termes, le paramètre de variation de score est représentatif de l'impact environnemental de la structure à construire sur la zone géographique prédéterminée de la Terre.

Dans un exemple, le paramètre de variation est une mesure de dispersion statistique absolue ou relative choisie parmi : l'étendue, l'écart moyen, l'écart interquartile, l'écart interdécile, la variance, l'écart-type, le coefficient de variation.

Toutefois, selon les besoins, on pourra obtenir le paramètre de variation à partir d'autres grandeurs statistiques, et ce, sans nécessiter de modifications substantielles de l'invention.

Dans un mode de réalisation particulier de l'invention, la zone géographique prédéterminée de la Terre présente un rayon dont une origine coïncide avec le barycentre des données géoréférencées qui définissent le contour extérieur géoréférencé de la structure à construire.

Dans un exemple, on peut définir le rayon entre 1 km et 100 km, de préférence entre 10 km et 80 km, encore de préférence entre 30 km et 60 km.

Toutefois, selon les besoins, on pourra envisager d'autres valeurs de rayon, et ce, sans nécessiter de modifications substantielles de l'invention.

Dans une première façon de réaliser l'invention, le procédé de prédiction 100 permet de choisir le ou les modèles entrainés selon la typologie de la structure à construire.

En pratique, dans cette première façon de réaliser l'invention, le procédé de prédiction 100 comprend en outre une étape de détermination ou de sélection 160 d'au moins une typologie de structure à construire qui est choisie parmi une pluralité de typologies prédéterminées de structure à construire.

Dans un exemple, on peut choisir la typologie de structure à construire parmi : un bâtiment dédié à l'artisanat et à l'industrie, un logement collectif, un logement individuel, un centre commercial, un hôtel, un parc d'attractions, un pont, une route, une école, un hôpital et de toutes combinaisons de celles-ci.

Toutefois, selon les besoins, on pourra envisager d'autres typologies de structure à construire, et ce, sans nécessiter de modifications substantielles de l'invention.

Ensuite, le procédé de prédiction 100 comprend également une première étape de recherche 170, à partir de la typologie de structure à construire, d'au moins une entrée d'une première table de sélection.

En pratique, la première table de sélection associe une typologie de structure à construire à au moins un modèle entrainé pour prédire le score de pression environnementale.

Enfin, dans cette première façon de réaliser l'invention, l'étape de prédiction 150 comprend l'utilisation du ou des modèles entrainés pour prédire le score de pression environnementale qui sont associés à la ou les entrées de la première table de sélection.

Dans une deuxième façon de réaliser l'invention, le procédé de prédiction 100 permet de choisir le ou les modèles entrainés selon la ou les valeurs du paramètre mesurable.

En pratique, dans cette deuxième façon de réaliser l'invention, le procédé de prédiction 100 comprend en outre une deuxième étape de recherche 180, à partir du paramètre mesurable qui est associé à la structure à construire, d'au moins une entrée d'une deuxième table de sélection.

En particulier, la deuxième table de sélection associe un paramètre mesurable qui est associé à la structure à construire à au moins un modèle entrainé pour prédire le score de pression environnementale.

Enfin, dans cette deuxième façon de réaliser l'invention, l'étape de prédiction 150 comprend l'utilisation du ou des modèles entrainés pour prédire le score de pression environnementale qui sont associés à la ou les entrées de la deuxième table de sélection.

Dans une troisième façon de réaliser l'invention, le procédé de prédiction 100 permet de calculer un score de pression environnementale qui intègre l'impact environnemental de la structure à construire sur la zone géographique prédéterminée de la Terre.

En pratique, dans cette troisième façon de réaliser l'invention, le procédé de prédiction 100 comprend en outre,
- une troisième étape d'obtention 190 d'au moins un premier score de pression environnementale associé à la zone géographique prédéterminée de la Terre, et
- une étape de calcul 191 d'au moins un deuxième score de pression environnementale à partir du premier score de pression environnementale et du paramètre de variation de score.

Dans un exemple, on obtient le deuxième score de pression environnementale par la soustraction du paramètre de variation de score au premier score de pression environnementale.

Toutefois, selon les besoins, on pourra envisager d'autres formules de calcul du deuxième score de pression environnementale, et ce, sans nécessiter de modifications substantielles de l'invention.

L'invention concerne aussi un système pour mettre en oeuvre le procédé de prédiction 100.

Ainsi, comme illustré dans l'exemple de la figure 2, le système 200 pour prédire l'impact environnemental d'au moins une structure à construire sur au moins une zone géographique prédéterminée de la Terre comprend au moins un dispositif de stockage de données 210 et au moins un processeur 220.

Le dispositif de stockage de données 210 est configuré pour stocker des instructions pour prédire l'impact environnemental d'au moins une structure à construire.

Le processeur 220 est configuré pour exécuter les instructions pour mettre en oeuvre tout ou partie du procédé de prédiction 100 tel que décrit ci-dessus.

L'invention concerne aussi un procédé d'entrainement d'un modèle d'apprentissage machine qui est destiné à prédire un paramètre de variation de score qui correspond à une variation d'au moins un score de pression environnementale.

Comme indiqué plus haut, le paramètre de variation de score est représentatif de l'impact environnemental d'une structure à construire sur au moins une zone géographique prédéterminée de la Terre.

En particulier, la zone géographique prédéterminée de la Terre comprend une pluralité de positions géographiques.

Ainsi, l'invention couvre également une zone géographique prédéterminée de la Terre qui comprend une ou plusieurs positions géographiques.

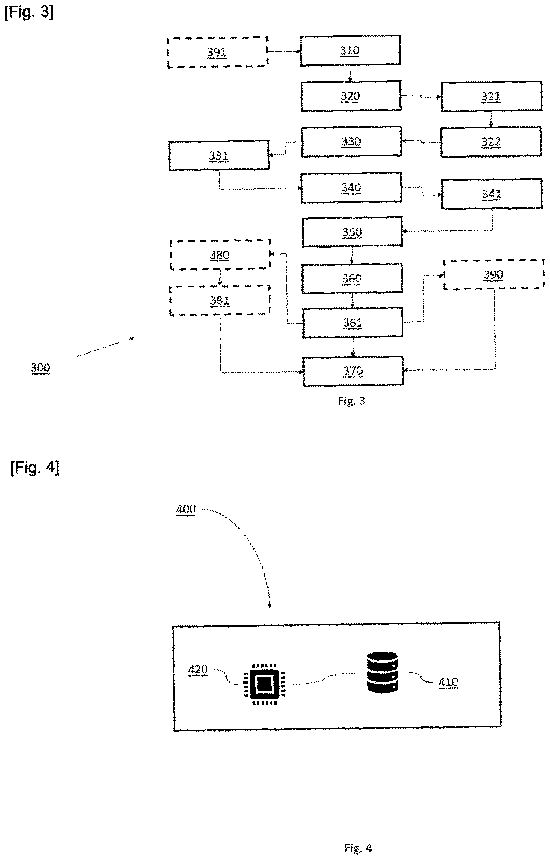

Tout d'abord, comme illustré dans l'exemple de la figure 3, le procédé d'entrainement 300 comprend une première étape d'obtention 310 d'un historique de données géoréférencées qui couvrent tout ou partie de la zone géographique prédéterminée de la Terre.

On entend par données géoréférencées toute donnée numérique caractérisée par des attributs géographiques qui permet de le localiser dans l'espace sur la Terre.

De manière classique, les données géoréférencées peuvent provenir de sources différentes.

Ainsi, dans un mode de réalisation particulier de l'invention, on obtient l'historique de données géoréférencées à partir d'au moins une source de données géoréférencées choisie parmi : un capteur in situ, une image aérienne, une image satellite, des plans ou des schémas directeurs de la structure à construire, et toutes combinaisons de ceux-ci.

Toutefois, selon les ressources disponibles, on pourra envisager d'obtenir l'historique de données géoréférencées à partir d'autres sources de données géoréférencées, et ce, sans nécessiter de modifications substantielles de l'invention.

En pratique, on obtient, respectivement, les données géoréférencées à des premières périodes d'historique.

Dans un exemple, les premières périodes d'historique sont successives.

Ensuite, le procédé d'entrainement 300 comprend une étape de recherche 320, à partir de l'historique de données géoréférencées, de la première donnée géoréférencée à laquelle apparait pour la première fois au moins une structure construite, dite donnée géoréférencée de référence.

Dans un exemple, la structure construite est un édifice ou un ouvrage d'art, tel qu'un immeuble, un pont, des fondations, une route, un tunnel, un barrage ou tout autre ouvrage d'art.

Toutefois, selon les besoins, on pourra envisager d'appliquer le procédé selon l'invention à d'autres structures construites, et ce, sans nécessiter de modifications substantielles de l'invention.

Dans un exemple, on réalise l'étape de recherche 320 au moyen d'au moins un algorithme d'extraction de contours de type connu.

Ainsi, pour la détection de la structure construite dans l'historique de données géoréférencées, on pourra utiliser un algorithme choisi parmi : modèle de contour actif, Canny-Deriche, Robers, Kirsch, Marr-Hildreth, Shen-Castan et toutes combinaisons de ceux-ci.

Toutefois, selon les besoins, on pourra envisager d'utiliser d'autres algorithmes de détection de contours, et ce, sans nécessiter de modifications substantielles de l'invention.

Dans une mise en oeuvre particulière, on pourra considérer qu'une construction est « construite » lorsque son contour extérieur reste inchangé pendant une période prédéterminée, dite de non-changement, qui est postérieure à la première période d'historique associée à la donnée géoréférencée de référence.

Dans un exemple, la période prédéterminée de non-changement est supérieure à 2 mois, de préférence supérieure à 6 mois, encore de préférence supérieure à 12 mois.

Toutefois, selon les ressources disponibles, on pourra envisager d'autres valeurs de période prédéterminée de non-changement, et ce, sans nécessiter de modifications substantielles de l'invention.

Puis, le procédé d'entrainement 300 comprend une première étape d'extraction de contours 321, à partir de la donnée géoréférencée de référence, d'un contour extérieur géoréférencé de la structure à construire.

Dans un exemple, on réalise la première étape d'extraction de contours 321 au moyen d'au moins un algorithme d'extraction de contours de type connu.

Ainsi, pour l'extraction de la structure construite dans la donnée géoréférencée de référence, on pourra utiliser un algorithme choisi parmi : modèle de contour actif, Canny-Deriche, Robers, Kirsch, Marr-Hildreth, Shen-Castan et toutes combinaisons de ceux-ci.

Toutefois, selon les besoins, on pourra envisager d'utiliser d'autres algorithmes de détection de contours, et ce, sans nécessiter de modifications substantielles de l'invention.

Par la suite, le procédé d'entrainement 300 comprend une deuxième étape d'obtention 322 d'au moins un paramètre mesurable qui est associé à la structure à construire.

Dans un mode de réalisation particulier de l'invention, comme indiqué plus haut, le paramètre mesurable qui est associé à la structure à construire décrit une propriété qui est choisie parmi : une surface, une morphologie, un effectif, une consommation, une production, une émission et toutes combinaisons de ceux-ci.

Après, le procédé d'entrainement 300 comprend une troisième étape d'obtention 330, pour tout ou partie de la pluralité de positions géographiques, d'un premier historique de valeurs antérieures de paramètres environnementaux.

On entend par paramètres environnementaux tout paramètre qui caractérise le milieu dans lequel se trouve un point géographique ou une zone géographique prédéterminée de la Terre.

Dans un mode de réalisation particulier de l'invention, les paramètres environnementaux sont choisis parmi : l'air, l'eau, l'urbanisation, la biodiversité et toutes combinaisons de ceux-ci.

Toutefois, selon les ressources disponibles, on pourra également inclure dans les paramètres environnementaux d'autres paramètres, comme des paramètres économiques et sociaux (p. ex. démographie, niveau instruction, niveau de vie, espérance de vie), et ce, sans nécessiter de modifications substantielles de l'invention.

En pratique, on obtient, respectivement, les valeurs antérieures de paramètres environnementaux du premier historique à au moins une deuxième période d'historique inférieure ou égale à la première période d'historique associée à la donnée géoréférencée de référence.

Ainsi, les valeurs antérieures de paramètres environnementaux du premier historique correspondent aux valeurs obtenues avant la détection de la première apparition de la structure construite.

Ensuite, le procédé d'entrainement 300 comprend une quatrième étape de calcul 331, pour tout ou partie de la deuxième période d'historique, d'au moins un premier score de pression environnementale à partir de tout ou partie de l'historique de valeurs antérieures de paramètres environnementaux.

Comme indiqué plus haut, le score de pression environnemental est un indicateur qui caractérise l'état environnemental d'un point géographique ou d'une zone géographique de la Terre à un moment donné.

Puis, le procédé d'entrainement 300 comprend une quatrième étape d'obtention 340, pour tout ou partie de la pluralité de positions géographiques, d'un deuxième historique de valeurs antérieures de paramètres environnementaux respectivement obtenues à au moins une troisième période d'historique supérieure ou égale à la première période d'historique associée à la donnée géoréférencée de référence.

Ainsi, les valeurs antérieures de paramètres environnementaux du deuxième historique correspondent aux valeurs obtenues après la détection de la première apparition de la structure construite.

Par la suite, le procédé d'entrainement 300 comprend une troisième étape de calcul 341, pour tout ou partie de la troisième période d'historique, d'au moins un deuxième score de pression environnementale à partir de tout ou partie de l'historique de valeurs antérieures de paramètres environnementaux.

Ensuite, le procédé d'entrainement 300 comprend une cinquième étape de calcul 350, d'au moins un paramètre de variation de score qui correspond à une variation entre le premier score de pression environnementale et le deuxième score de pression environnementale.

Dans un exemple, le paramètre de variation est une mesure de dispersion statistique absolue ou relative choisie parmi : l'étendue, l'écart moyen, l'écart interquartile, l'écart interdécile, la variance, l'écart-type, le coefficient de variation.

Toutefois, selon les besoins, on pourra obtenir le paramètre de variation à partir d'autres grandeurs statistiques, et ce, sans nécessiter de modifications substantielles de l'invention.

Après, le procédé d'entrainement 300 comprend une première étape de formation 360 d'un premier vecteur qui comprend le contour extérieur géoréférencé de la structure à construire et le paramètre mesurable qui est associé à la structure à construire.

Puis, le procédé d'entrainement 300 comprend une deuxième étape de formation 361 d'un deuxième vecteur qui comprend le paramètre de variation de score.

Enfin, le procédé d'entrainement 300 comprend une étape d'entrainement 370 d'un modèle d'apprentissage machine via un apprentissage automatique qui comprend une entrée et une sortie.

En pratique, l'entrée de l'apprentissage automatique est configurée pour recevoir le premier vecteur et la sortie de l'apprentissage automatique est configurée pour recevoir le deuxième vecteur.

Ainsi, avec l'invention, on peut entrainer un modèle d'apprentissage machine selon une temporalité prédéterminée.

Pour cela, on peut filtrer le deuxième historique de valeurs antérieures de paramètres environnementaux pour ne conserver que les celles qui correspondent à la temporalité souhaitée pour le modèle entrainé.

Par exemple, on pourra entrainer un modèle d'apprentissage machine pour prédire un paramètre de variation de score induit par une structure à construire, à l'échéance d'une période de prédiction prédéterminée après la construction de la structure (p. ex. 1 an, 3 ans ou 5 ans après).

Dans un mode de réalisation particulier de l'invention, l'apprentissage automatique comprend un algorithme d'entrainement qui est choisi parmi : une régression des moindres carrés partiels, une régression linéaire, un réseau neuronal, un arbre de décision, un algorithme génétique, une programmation génétique, une méthode des k plus proches voisins, un réseau à fonctions de base radiales, une fonction aléatoire, une forêt, une machine à vecteurs de support et un apprentissage profond.

Toutefois, selon les besoins, on pourra utiliser d'autres algorithmes d'entrainement, et ce, sans nécessiter de modifications substantielles de l'invention.

Dans une première façon de réaliser l'invention, le procédé d'entrainement 300 permet d'autoriser le choix du ou des modèles entrainés selon la typologie de la structure à construire.

En particulier, dans cette première façon de réaliser l'invention, le procédé d'entrainement 300 comprend en outre une étape de détermination ou de sélection 380 d'au moins une typologie de structure à construire qui est choisie parmi une pluralité de typologies prédéterminées de structure à construire.

Dans un exemple, on peut choisir la typologie de structure à construire parmi : un bâtiment dédié à l'artisanat et à l'industrie, un logement collectif, un logement individuel, un centre commercial, un hôtel, un parc d'attractions, un pont, une route, une école, un hôpital et de toutes combinaisons de celles-ci.

Toutefois, selon les besoins, on pourra envisager d'autres typologies de structure à construire, et ce, sans nécessiter de modifications substantielles de l'invention.

Enfin, le procédé d'entrainement 300 comprend une première étape d'insertion 381 de la typologie de structure à construire dans une première table de sélection.

En pratique, la première table de sélection associe une typologie de structure à construire à au moins un modèle d'apprentissage machine qui est entrainé pour prédire le score de pression environnementale.

Dans une deuxième façon de réaliser l'invention, le procédé d'entrainement 300 permet d'autoriser le choix du ou des modèles entrainés selon la ou les valeurs du paramètre mesurable.

En particulier, dans cette deuxième façon de réaliser l'invention, le procédé d'entrainement 300 comprend en outre une deuxième étape d'insertion 390 du paramètre mesurable qui est associé à la structure à construire dans une deuxième table de sélection.

En pratique, la deuxième table de sélection associe un paramètre mesurable qui est associé à la structure à construire, à au moins un modèle d'apprentissage machine qui est entrainé pour prédire le score de pression environnementale.

Dans une troisième façon de réaliser l'invention, le procédé d'entrainement 300 permet l'obtention de l'historique de données géoréférencées à partir de sources diverses.

En particulier, dans cette troisième façon de réaliser l'invention, le procédé d'entrainement 300 comprend en outre une étape de dérivation 391 de l'historique de données géoréférencées à partir d'une pluralité d'éléments choisis parmi : un capteur in situ, une image aérienne, une image satellite, des plans ou des schémas directeurs de la structure à construire, et toutes combinaisons de ceux-ci.

L'invention concerne aussi un système pour mettre en oeuvre le procédé d'entrainement 300.

Ainsi, comme illustré dans l'exemple de la figure 4, le système 400 pour l'entrainement d'un modèle d'apprentissage machine comprend au moins un dispositif de stockage de données 410 et au moins un processeur 420.

Le dispositif de stockage de données 410 est configuré pour stocker des instructions pour prédire l'impact environnemental d'au moins une structure à construire.

Le processeur 420 est configuré pour exécuter les instructions pour mettre en oeuvre tout ou partie du procédé d'entrainement 300 tel que décrit ci-dessus.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures annexées.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais, au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Procédé implémenté par ordinateur de prédiction (100), sur une période de prédiction prédéterminée, d'au moins un paramètre de variation d'un score de pression environnementale associé à l'introduction d'au moins une structure à construire sur au moins une zone géographique prédéterminée de la Terre, le paramètre de variation étant représentatif de l'impact de la structure à construire sur un ou plusieurs paramètres environnementaux qui caractérisent le milieu dans laquelle se trouve la zone géographique prédéterminée de la Terre, le procédé de prédiction (100) comprenant :
- une première étape d'obtention (110) d'une pluralité de données géoréférencées qui est représentative de la surface au sol occupée par la structure à construire, les données géoréférencées provenant de sources différentes,
- une étape d'extraction de contours (120), à partir de la pluralité de données géoréférencées, d'un contour extérieur géoréférencé de la structure à construire,
- une deuxième étape d'obtention (130) d'au moins un paramètre mesurable qui est associé à la structure à construire,
- une étape de formation (140) d'un vecteur qui comprend le contour extérieur géoréférencé de la structure à construire et le paramètre mesurable qui est associé à la structure à construire, et
- une étape de prédiction (150), à partir de la période de prédiction prédéterminée, du vecteur et d'au moins un modèle d'apprentissage machine qui est entrainé, dit modèle entrainé, pour prédire le paramètre de variation de score de pression environnementale sur la période de prédiction prédéterminée,.

2. Procédé implémenté par ordinateur (100) selon la revendication 1 comprenant en outre :
- une étape de détermination ou de sélection (160) d'au moins une typologie de structure à construire qui est choisie parmi une pluralité de typologies prédéterminées de structure à construire et de toutes combinaisons de celles-ci, et
- une première étape de recherche (170), à partir de la typologie de structure à construire, d'au moins une entrée d'une première table de sélection qui associe une typologie de structure à construire à au moins un modèle entrainé pour prédire le score de pression environnementale, et
dans lequel, l'étape de prédiction (150) comprend l'utilisation du ou des modèles entrainés pour prédire le score de pression environnementale qui sont associés à la ou les entrées de la première table de sélection.

3. Procédé implémenté par ordinateur (100) selon l'une quelconque des revendications 1 à 2 comprenant en outre :
- une deuxième étape de recherche (180), à partir du paramètre mesurable qui est associé à la structure à construire, d'au moins une entrée d'une deuxième table de sélection qui associe un paramètre mesurable qui est associé à la structure à construire à au moins un modèle entrainé pour prédire le score de pression environnementale, et
dans lequel, l'étape de prédiction (150) comprend l'utilisation du ou des modèles entrainés pour prédire le score de pression environnementale qui sont associés à la ou les entrées de la deuxième table de sélection.

4. Procédé implémenté par ordinateur (100) selon l'une quelconque des revendications 1 à 3, comprenant en outre :
- une troisième étape d'obtention (190) d'au moins un premier score de pression environnementale associé à la zone géographique prédéterminée de la Terre, et
- une étape de calcul (191) d'au moins un deuxième score de pression environnementale à partir du premier score de pression environnementale et du paramètre de variation de score.

5. Procédé implémenté par ordinateur (100) selon l'une quelconque des revendications 1 à 4, dans lequel la zone géographique prédéterminée de la Terre présente un rayon dont une origine coïncide avec le barycentre des données géoréférencées qui définissent le contour extérieur géoréférencé de la structure à construire.

6. Procédé implémenté par ordinateur (100) selon l'une quelconque des revendications 1 à 5, dans lequel le paramètre mesurable qui est associé à la structure à construire décrit une propriété qui est choisie parmi : une surface, un effectif, une consommation, une production, une émission et toutes combinaisons de ceux-ci.

7. Système (200) pour prédire, sur une période de prédiction prédéterminée, au moins un paramètre de variation d'un score de pression environnementale associé à l'introduction d'au moins une structure à construire sur au moins une zone géographique prédéterminée de la Terre, le paramètre de variation étant représentatif de l'impact de la structure à construire sur un ou plusieurs paramètres environnementaux qui caractérisent le milieu dans laquelle se trouve la zone géographique prédéterminée de la Terre, le système (200) comprenant :
- au moins un dispositif de stockage de données (210) configuré pour stocker des instructions pour prédire le paramètre de variation de score de pression environnementale, et
- au moins un processeur (220) configuré pour exécuter les instructions pour mettre en oeuvre un procédé implémenté par ordinateur de prédiction (100) selon l'une quelconque des revendications 1 à 6.

8. Procédé implémenté par ordinateur d'entrainement (300) d'un modèle d'apprentissage machine qui est destiné à prédire, sur une période de prédiction prédéterminée, au moins un paramètre de variation de score de pression environnementale associé à l'introduction d'au moins une structure à construire sur au moins une zone géographique prédéterminée de la Terre, le paramètre de variation de score étant représentatif de l'impact de la structure à construire sur un ou plusieurs paramètres environnementaux qui caractérisent le milieu dans laquelle se trouve la zone géographique prédéterminée de la Terre, la zone géographique prédéterminée de la Terre comprenant une pluralité de positions géographiques, le procédé d'entrainement (300) comprenant :
- une première étape d'obtention (310) d'un historique de données géoréférencées qui couvrent tout ou partie de la zone géographique prédéterminée de la Terre, respectivement obtenues à des premières périodes d'historique, les données géoréférencées provenant de sources différentes,
- une étape de recherche (320), à partir de l'historique de données géoréférencées, de la première donnée géoréférencée à laquelle apparait pour la première fois au moins une structure construite, dite donnée géoréférencée de référence,
- une étape d'extraction de contours (321), à partir de la donnée géoréférencée de référence, d'un contour extérieur géoréférencé de la structure à construire,
- une deuxième étape d'obtention (322) d'au moins un paramètre mesurable qui est associé à la structure à construire,
- une troisième étape d'obtention (330), pour tout ou partie de la pluralité de positions géographiques, d'un premier historique de valeurs antérieures de paramètres environnementaux respectivement obtenues à au moins une deuxième période d'historique inférieure ou égale à la première période d'historique associée à la donnée géoréférencée de référence,
- une quatrième étape de calcul (331), pour tout ou partie de la deuxième période d'historique, d'au moins un premier score de pression environnementale à partir de tout ou partie de l'historique de valeurs antérieures de paramètres environnementaux,
- une quatrième étape d'obtention (340), pour tout ou partie de la pluralité de positions géographiques, d'un deuxième historique de valeurs antérieures de paramètres environnementaux respectivement obtenues à au moins une troisième période d'historique supérieure ou égale à la première période d'historique associée à la donnée géoréférencée de référence,
- une troisième étape de calcul (341), pour tout ou partie de la troisième période d'historique, d'au moins un deuxième score de pression environnementale à partir de tout ou partie de l'historique de valeurs antérieures de paramètres environnementaux,
- une cinquième étape de calcul (350), d'au moins paramètre de variation de score qui correspond à une variation entre le premier score de pression environnementale et le deuxième score de pression environnementale sur la période de prédiction prédéterminée,
- une première étape de formation (360) d'un premier vecteur qui comprend le contour extérieur géoréférencé de la structure à construire et le paramètre mesurable qui est associé à la structure à construire,
- une deuxième étape de formation (361) d'un deuxième vecteur qui comprend le paramètre de variation de score, et
- une étape d'entrainement (370) d'un modèle d'apprentissage machine via un apprentissage automatique qui comprend une entrée et une sortie, l'entrée étant configurée pour recevoir le premier vecteur et la sortie étant configurée pour recevoir le deuxième vecteur.

9. Procédé implémenté par ordinateur (300) selon la revendication 8, comprenant en outre :
- une étape de détermination ou de sélection (380) d'au moins une typologie de structure à construire qui est choisie parmi une pluralité de typologies prédéterminées de structure à construire et de toutes combinaisons de celles-ci, et
- une première étape d'insertion (381) de la typologie de structure à construire dans une première table de sélection qui associe une typologie de structure à construire à au moins un modèle d'apprentissage machine qui est entrainé pour prédire le score de pression environnementale.

10. Procédé implémenté par ordinateur (300) selon l'une quelconque des revendications 8 à 9, comprenant en outre :
- une deuxième étape d'insertion (390) du paramètre mesurable qui est associé à la structure à construire dans une deuxième table de sélection qui associe un paramètre mesurable qui est associé à la structure à construire à au moins un modèle d'apprentissage machine qui est entrainé pour prédire le score de pression environnementale.

11. Procédé implémenté par ordinateur (300) selon l'une quelconque des revendications 8 à 10 comprenant en outre une étape de dérivation (391) de l'historique de données géoréférencées à partir d'une pluralité d'éléments choisis parmi : un capteur in situ, une image aérienne, une image satellite, des plans ou des schémas directeurs de la structure à construire, et toutes combinaisons de ceux-ci.

12. Procédé implémenté par ordinateur (300) selon l'une quelconque des revendications 8 à 11, dans lequel le paramètre mesurable qui est associé à la structure à construire décrit une propriété qui est choisie parmi : une surface, un effectif, une consommation, une production, une émission et toutes combinaisons de ceux-ci.

13. Procédé implémenté par ordinateur (300) selon l'une quelconque des revendications 8 à 12, dans lequel les paramètres environnementaux sont choisis parmi : l'air, l'eau, l'urbanisation, la biodiversité et toutes combinaisons de ceux-ci.

14. Procédé implémenté par ordinateur (300) selon l'une quelconque des revendications 8 à 13 dans lequel l'apprentissage automatique comprend un algorithme d'entrainement qui est choisi parmi : une régression des moindres carrés partiels, une régression linéaire, un réseau neuronal, un arbre de décision, un algorithme génétique, une programmation génétique, une méthode des k plus proches voisins, un réseau à fonctions de base radiales, une fonction aléatoire, une forêt, une machine à vecteurs de support et un apprentissage profond.

15. Système (400) pour l'entrainement d'un modèle d'apprentissage machine qui est destiné à prédire, sur une période de prédiction prédéterminée, au moins un paramètre de variation de score de pression environnementale associé à l'introduction d'au moins une structure à construire sur au moins une zone géographique prédéterminée de la Terre, le paramètre de variation de score étant représentatif de l'impact de la structure à construire sur un ou plusieurs paramètres environnementaux qui caractérisent le milieu dans laquelle se trouve la zone géographique prédéterminée de la Terre, la zone géographique prédéterminée de la Terre comprenant une pluralité de positions géographiques, le système (400) comprenant :
- au moins un dispositif de stockage de données (410) configuré pour stocker des instructions pour l'entrainement d'un modèle d'apprentissage machine ; et
- au moins un processeur (420) configuré pour exécuter les instructions pour mettre en oeuvre un procédé implémenté par ordinateur (300) selon l'une quelconque des revendications 8 à 14.

## Patentansprüche

1. Computerimplementiertes Verfahren zur Vorhersage (100), über einen vorbestimmten Vorhersagezeitraum, von mindestens einem Parameter der Änderung einer Bewertung der Umweltbelastung, der mit der Einführung mindestens einer zu errichtenden Struktur in mindestens einem vorbestimmten geografischen Gebiet der Erde verbunden ist, wobei der Änderungsparameter repräsentativ für den Einfluss der zu errichtenden Struktur auf einen oder mehrere Umweltparameter ist, die die Umgebung charakterisieren, in der sich das vorbestimmte geografische Gebiet der Erde befindet, wobei das Verfahren zur Vorhersage (100) Folgendes umfasst:
- einen ersten Schritt des Erlangens (110) einer Vielzahl von georeferenzierten Daten, die für die von der zu errichtenden Struktur eingenommene Bodenfläche repräsentativ sind, wobei die georeferenzierten Daten aus verschiedenen Quellen stammen,
- einen Schritt des Extrahierens von Konturen (120) aus der Vielzahl von georeferenzierten Daten einer georeferenzierten äußeren Kontur der zu errichtenden Struktur,
- einen zweiten Schritt des Erlangens (130) mindestens eines messbaren Parameters, der mit der zu errichtenden Struktur verbunden ist,
- einen Schritt des Bildens (140) eines Vektors, der die georeferenzierte äußere Kontur der zu errichtenden Struktur und den messbaren Parameter umfasst, der mit der zu errichtenden Struktur verbunden ist, und
- einen Schritt des Vorhersagens (150), ausgehend von dem vorbestimmten Vorhersagezeitraum, des Vektors und mindestens eines Modells für maschinelles Lernen, das trainiert wird, genannt trainiertes Modell, um den Parameter der Änderung der Bewertung der Umweltbelastung über den vorbestimmten Vorhersagezeitraum vorherzusagen.

2. Computerimplementiertes Verfahren (100) nach Anspruch 1, das weiter umfasst:
- einen Schritt des Bestimmens oder Auswählens (160) von mindestens einer Typologie einer zu errichtenden Struktur, welche aus einer Vielzahl von vorbestimmten Typologien der zu errichtenden Struktur und allen Kombinationen hiervon ausgewählt wird, und
- einen ersten Schritt des Suchens (170), ausgehend von der Typologie der zu errichtenden Struktur, nach mindestens einem Eintrag in einer ersten Auswahltabelle, die eine Typologie der zu errichtenden Struktur mit mindestens einem trainierten Modell zur Vorhersage der Bewertung der Umweltbelastung verknüpft, und
wobei der Schritt des Vorhersagens (150) die Verwendung des oder der trainierten Modelle zur Vorhersage der Bewertung der Umweltbelastung umfasst, das/die mit dem oder den Einträgen der ersten Auswahltabelle verknüpft ist/sind.

3. Computerimplementiertes Verfahren (100) nach einem der Ansprüche 1 bis 2, das weiter umfasst:
- einen zweiten Schritt des Suchens (180), ausgehend von dem messbaren Parameter, der mit der zu errichtenden Struktur verbunden ist, nach mindestens einem Eintrag in einer zweiten Auswahltabelle, die einen messbaren Parameter, der mit der zu errichtenden Struktur verbunden ist, mit mindestens einem trainierten Modell zur Vorhersage der Bewertung der Umweltbelastung verknüpft, und
wobei der Schritt des Vorhersagens (150) die Verwendung des oder der trainierten Modelle zur Vorhersage der Bewertung der Umweltbelastung umfasst, das/die mit dem oder den Einträgen der zweiten Auswahltabelle verknüpft ist/sind.

4. Computerimplementiertes Verfahren (100) nach einem der Ansprüche 1 bis 3, das weiter umfasst:
- einen dritten Schritt des Erlangens (190) mindestens einer ersten Bewertung der Umweltbelastung, welche mit dem vorbestimmten geografischen Gebiet der Erde verbunden ist, und
- einen Schritt des Berechnens (191) mindestens einer zweiten Bewertung der Umweltbelastung ausgehend von der ersten Bewertung der Umweltbelastung und dem Parameter der Änderung der Bewertung.

5. Computerimplementiertes Verfahren (100) nach einem der Ansprüche 1 bis 4, wobei das vorbestimmte geografische Gebiet der Erde einen Radius aufweist, dessen einer Ursprung mit dem Schwerpunkt der georeferenzierten Daten zusammenfällt, die die georeferenzierte äußere Kontur der zu errichtenden Struktur definieren.

6. Computerimplementiertes Verfahren (100) nach einem der Ansprüche 1 bis 5, wobei der messbare Parameter, der mit der zu errichtenden Struktur verbunden ist, eine Eigenschaft beschreibt, die ausgewählt ist aus: einer Fläche, einer Erwerbsbevölkerung, einem Verbrauch, einer Produktion, einer Emission und allen Kombinationen hiervon.

7. System (200) zur Vorhersage, über einen vorbestimmten Vorhersagezeitraum, von mindestens einem Parameter der Änderung einer Bewertung der Umweltbelastung, der mit der Einführung mindestens einer zu errichtenden Struktur in mindestens einem vorbestimmten geografischen Gebiet der Erde verbunden ist, wobei der Änderungsparameter repräsentativ für den Einfluss der zu errichtenden Struktur auf einen oder mehrere Umweltparameter ist, die die Umgebung charakterisieren, in der sich das vorbestimmte geografische Gebiet der Erde befindet, wobei das System (200) Folgendes umfasst:
- mindestens eine Vorrichtung zur Speicherung von Daten (210), die dafür konfiguriert ist, Befehle zur Vorhersage des Parameters der Änderung der Bewertung der Umweltbelastung zu speichern, und
- mindestens einen Prozessor (220), der dafür konfiguriert ist, die Befehle zur Implementierung eines durch einen Computer implementierten Verfahrens zur Vorhersage (100) nach einem der Ansprüche 1 bis 6 auszuführen.

8. Computerimplementiertes Verfahren zum Trainieren (300) eines Modells für maschinelles Lernen, das dazu bestimmt ist, über einen vorbestimmten Vorhersagezeitraum, mindestens einen Parameter der Änderung der Bewertung der Umweltbelastung vorherzusagen, der mit der Einführung mindestens einer zu errichtenden Struktur in mindestens einem vorbestimmten geografischen Gebiet der Erde verbunden ist, wobei der Parameter der Änderung der Bewertung repräsentativ für den Einfluss der zu errichtenden Struktur auf einen oder mehrere Umweltparameter ist, die die Umgebung charakterisieren, in der sich das vorbestimmte geografische Gebiet der Erde befindet, wobei das vorbestimmte geografische Gebiet der Erde eine Vielzahl von geografischen Positionen umfasst, wobei das Verfahren zum Trainieren (300) Folgendes umfasst:
- einen ersten Schritt des Erlangens (310) einer Historie von georeferenzierten Daten, die die Gesamtheit oder einen Teil des vorbestimmten geografischen Gebiets der Erde abdecken bzw. in ersten Zeiträumen der Historie gewonnen wurden, wobei die georeferenzierten Daten aus verschiedenen Quellen stammen,
- einen Schritt des Suchens (320), ausgehend von der Historie der georeferenzierten Daten, der ersten georeferenzierten Daten, bei denen zum ersten Mal mindestens eine errichtete Struktur erscheint, genannt georeferenzierte Referenzdaten,
- einen Schritt des Extrahierens von Konturen (321) aus den georeferenzierten Referenzdaten einer georeferenzierten äußeren Kontur der zu errichtenden Struktur,
- einen zweiten Schritt des Erlangens (322) mindestens eines messbaren Parameters, der mit der zu errichtenden Struktur verbunden ist,
- einen dritten Schritt des Erlangens (330) einer ersten Historie früherer Werte von Umweltparametern für die Gesamtheit oder einen Teil der Vielzahl von geografischen Positionen, welche jeweils in mindestens einem zweiten Zeitraum der Historie erhalten wurden, der kleiner oder gleich dem ersten Zeitraum der Historie ist, der mit den georeferenzierten Referenzdaten verbunden ist,
- einen vierten Schritt des Berechnens (331), für die Gesamtheit oder einen Teil des zweiten Zeitraums der Historie, mindestens einer ersten Bewertung der Umweltbelastung aus der Gesamtheit oder einem Teil der Historie früherer Werte von Umweltparametern,
- einen vierten Schritt des Erlangens (340), für die Gesamtheit oder einen Teil der Vielzahl von geografischen Positionen, einer zweiten Historie früherer Werte von Umweltparametern, die jeweils in mindestens einem dritten Zeitraum der Historie erhalten wurden, der größer oder gleich dem ersten Zeitraum der Historie ist, der mit den georeferenzierten Referenzdaten verbunden ist,
- einen dritten Schritt des Berechnens (341), für die Gesamtheit oder einen Teil des dritten Zeitraums der Historie, mindestens einer zweiten Bewertung der Umweltbelastung aus der Gesamtheit oder einem Teil der Historie früherer Werte von Umweltparametern,
- einen fünften Schritt des Berechnens (350) mindestens eines Parameters der Änderung der Bewertung, der einer Änderung zwischen der ersten Bewertung der Umweltbelastung und der zweiten Bewertung der Umweltbelastung über den vorbestimmten Vorhersagezeitraum entspricht,
- einen ersten Schritt des Bildens (360) eines ersten Vektors, der die georeferenzierte äußere Kontur der zu errichtenden Struktur und den messbaren Parameter umfasst, der mit der zu errichtenden Struktur verbunden ist,
- einen zweiten Schritt des Bildens (361) eines zweiten Vektors, der den Parameter der Änderung der Bewertung umfasst, und
- einen Schritt des Trainierens (370) eines Modells für maschinelles Lernen über automatisches Lernen, das einen Eingang und einen Ausgang umfasst, wobei der Eingang dafür konfiguriert ist, den ersten Vektor zu empfangen, und der Ausgang dafür konfiguriert ist, den zweiten Vektor zu empfangen.

9. Computerimplementiertes Verfahren (300) nach Anspruch 8, das weiter umfasst:
- einen Schritt des Bestimmens oder Auswählens (380) von mindestens einer Typologie einer zu errichtenden Struktur, welche aus einer Vielzahl von vorbestimmten Typologien der zu errichtenden Struktur und allen Kombinationen hiervon ausgewählt wird, und
- einen ersten Schritt des Einfügens (381)der Typologie der zu errichtenden Struktur in eine erste Auswahltabelle, die eine Typologie der zu errichtenden Struktur mit mindestens einem Modell für maschinelles Lernen verknüpft, das für die Vorhersage der Bewertung der Umweltbelastung trainiert wird.

10. Computerimplementiertes Verfahren (300) nach einem der Ansprüche 8 bis 9, das weiter umfasst:
- einen zweiten Schritt des Einfügens (390) des messbaren Parameters, der mit der zu errichtenden Struktur verbunden ist, in eine zweite Auswahltabelle, die einen messbaren Parameter, der mit der zu errichtenden Struktur verbunden ist, mit mindestens einem Modell für maschinelles Lernen verknüpft, das für die Vorhersage der Bewertung der Umweltbelastung trainiert wird.

11. Computerimplementiertes Verfahren (300) nach einem der Ansprüche 8 bis 10, das weiter einen Schritt des Ableitens (391) der Historie der georeferenzierten Daten aus einer Vielzahl von Elementen umfasst, die ausgewählt sind aus: einem In-situ-Sensor, einem Luftbild, einem Satellitenbild, Plänen oder Masterplänen der zu errichtenden Struktur und allen Kombinationen hiervon.

12. Computerimplementiertes Verfahren (300) nach einem der Ansprüche 8 bis 11, wobei der messbare Parameter, der mit der zu errichtenden Struktur verbunden ist, eine Eigenschaft beschreibt, die ausgewählt ist aus: einer Fläche, einer Erwerbsbevölkerung, einem Verbrauch, einer Produktion, einer Emission und allen Kombinationen hiervon.

13. Computerimplementiertes Verfahren (300) nach einem der Ansprüche 8 bis 12, wobei die Umweltparameter ausgewählt sind aus: Luft, Wasser, Urbanisierung, Biodiversität und allen Kombinationen hiervon.

14. Computerimplementiertes Verfahren (300) nach einem der Ansprüche 8 bis 13, wobei das automatische Lernen einen Trainingsalgorithmus umfasst, der ausgewählt ist aus: einer Regression der partiellen kleinsten Quadrate, einer linearen Regression, einem neuronalen Netzwerk, einem Entscheidungsbaum, einem genetischen Algorithmus, einer genetischen Programmierung, einer k-nächste-Nachbarn-Methode, einem Netzwerk mit radialen Basisfunktionen, einer Zufallsfunktion, einem Wald, einer Support-Vektor-Maschine und Deep Learning.

15. System (400) zum Trainieren eines Modells für maschinelles Lernen, das dazu bestimmt ist, über einen vorbestimmten Vorhersagezeitraum, mindestens einen Parameter der Änderung der Bewertung der Umweltbelastung vorherzusagen, der mit der Einführung mindestens einer zu errichtenden Struktur in mindestens einem vorbestimmten geografischen Gebiet der Erde verbunden ist, wobei der Parameter der Änderung der Bewertung repräsentativ für den Einfluss der zu errichtenden Struktur auf einen oder mehrere Umweltparameter ist, die die Umgebung charakterisieren, in der sich das vorbestimmte geografische Gebiet der Erde befindet, wobei das vorbestimmte geografische Gebiet der Erde eine Vielzahl von geografischen Positionen umfasst, wobei das System (400) Folgendes umfasst:
- mindestens eine Vorrichtung zur Speicherung von Daten (410), die dafür konfiguriert ist, Befehle zum Trainieren eines Modells für maschinelles Lernen zu speichern; und
- mindestens einen Prozessor (420), der dafür konfiguriert ist, die Befehle zur Implementierung eines durch einen Computer implementierten Verfahrens (300) nach einem der Ansprüche 8 bis 14 auszuführen.

## Claims

1. A computer- implemented method (100) for predicting, over a predetermined prediction period, at least one variation parameter of an environmental pressure score associated with the introduction of at least one structure to be built on at least one predetermined geographic area of the Earth, the variation parameter being representative of the impact of the structure to be built on one or several environmental parameters which characterize the environment in which the predetermined geographic area of the Earth is located, the prediction method (100) comprising:
- a first step (110) of obtaining a plurality of georeferenced data which is representative of the ground surface occupied by the structure to be built, the georeferenced data coming from different sources,
- a step (120) of extracting contours, based on the plurality of georeferenced data of a georeferenced external contour of the structure to be built,
- a second step (130) of obtaining at least one measurable parameter which is associated with the structure to be built,
- a step (140) of forming a vector which comprises the georeferenced external contour of the structure to be built and the measurable parameter which is associated with the structure to be built, and
- a step (150) of predicting, based on the predetermined prediction period, the vector and at least one machine learning model which is trained, called trained model, to predict the environmental pressure score variation parameter over the predetermined prediction period.

2. The computer-implemented method (100) according to claim 1 further comprising:
- a step (160) of determining or selecting at least one typology of a structure to be built which is chosen from a plurality of predetermined typologies of a structure to be built and any combinations thereof, and
- a first step (170) of searching, based on the typology of a structure to be built, at least one input of a first selection table which associates a typology of a structure to be built with at least one model trained to predict the environmental pressure score, and
wherein, the prediction step (150) comprises the use of the trained model(s) to predict the environmental pressure score which is/are associated with the input (s) of the first selection table.

3. The computer-implemented method (100) according to any one of claims 1 to 2 further comprising:
- a second step (180) of searching, based on the measurable parameter which is associated with the structure to be built, at least one input of a second selection table which associates a measurable parameter which is associated with the structure to be built with at least one model trained to predict the environmental pressure score, and
wherein the prediction step (150) comprises the use of the trained model(s) to predict the environmental pressure score which is/are associated with the input(s) of the second selection table.

4. The computer-implemented method (100) according to any one of claims 1 to 3, further comprising:
- a third step (190) of obtaining at least a first environmental pressure score associated with the predetermined geographical area of the Earth, and
- a step (191) of calculating at least a second environmental pressure score based on the first environmental pressure score and the score variation parameter.

5. The computer-implemented method (100) according to any one of claims 1 to 4, wherein the predetermined geographical area of the Earth has a radius whose origin coincides with the barycenter of the georeferenced data which define the georeferenced external contour of the structure to be built.

6. The computer-implemented method (100) according to any one of claims 1 to 5, wherein the measurable parameter which is associated with the structure to be built describes a property which is chosen from: a surface, a workforce, a consumption, a production, an emission and any combinations thereof.

7. A system (200) for predicting, over a predetermined prediction period, at least one variation parameter of an environmental pressure score associated with the introduction of at least one structure to be built on at least one predetermined geographical area of the Earth, the variation parameter being representative of the impact of the structure to be built on one or several environmental parameters which characterize the environment in which the predetermined geographical area of the Earth is located, the system (200) comprising:
- at least one data storage device (210) configured to store instructions for predicting the environmental pressure score variation parameter, and
- at least one processor (220) configured to execute the instructions for implementing a method implemented by a prediction computer (100) according to any one of claims 1 to 6.

8. A computer-implemented method (300) for training a machine learning model which is intended to predict, over a predetermined prediction period, at least one environmental pressure score variation parameter associated with the introduction of at least one structure to be built on at least one predetermined geographical area of the Earth, the score variation parameter being representative of the impact of the structure to be built on one or several environmental parameters which characterize the environment in which the predetermined geographical area of the Earth is located, the predetermined geographical area of the Earth comprising a plurality of geographical positions, the training method (300) comprising:
- a first step (310) of obtaining a history of georeferenced data that cover all or part of the predetermined geographical area of the Earth, respectively obtained at first history periods, the georeferenced data coming from different sources,
- a step (320) of searching, based on the history of georeferenced data, the first georeferenced data to which at least one built structure, called reference georeferenced data, appears for the first time,
- a step (321) of extracting contours, based on the reference georeferenced data of a georeferenced external contour of the structure to be built,
- a second step (322) of obtaining at least one measurable parameter which is associated with the structure to be built,
- a third step (330) of obtaining, for all or part of the plurality of geographical positions, a first history of previous values of environmental parameters respectively obtained at least at a second history period smaller than or equal to the first history period associated with the reference georeferenced data,
- a fourth step (331) of calculating, for all or part of the second history period, at least a first environmental pressure score based all or part of the history of previous values of environmental parameters,
- a fourth step (340) of obtaining, for all or part of the plurality of geographical positions, a second history of previous values of environmental parameters respectively obtained at least at a third history period greater than or equal to the first history period associated with the reference georeferenced data,
- a third step (341) of calculating, for all or part of the third history period, at least a second environmental pressure score based on all or part of the history of previous values of environmental parameters,
- a fifth step (350) of calculating at least one score variation parameter which corresponds to a variation between the first environmental pressure score and the second environmental pressure score over the predetermined prediction period,
- a first step (360) of forming a first vector which comprises the georeferenced external contour of the structure to be built and the measurable parameter which is associated with the structure to be built,
- a second step (361) of forming a second vector which comprises the score variation parameter, and
- a step (370) of training a machine learning model via an automatic learning which comprises an input and an output, the input being configured to receive the first vector and the output being configured to receive the second vector.

9. The computer-implemented method (300) according to claim 8, further comprising:
- a step (380) of determining or selecting at least one typology of a structure to be built which is chosen from a plurality of predetermined typologies of a structure to be built and any combinations thereof, and
- a first step (381) of inserting the typology of a structure to be built into a first selection table which associates a typology of a structure to be built with at least one machine learning model which is trained to predict the environmental pressure score.

10. The computer-implemented method (300) according to any one of claims 8 to 9, further comprising:
- a second step (390) of inserting the measurable parameter which is associated with the structure to be built in a second selection table which associates a measurable parameter which is associated with the structure to be built with at least one machine learning model which is trained to predict the environmental pressure score.

11. The computer-implemented method (300) according to any one of claims 8 to 10 further comprising a step (391) of deriving the history of georeferenced data based on a plurality of elements chosen from: an in situ sensor, an aerial image, a satellite image, plans or master plans of the structure to be built, and any combinations thereof.

12. The computer-implemented method (300) according to any one of claims 8 to 11, wherein the measurable parameter which is associated with the structure to be built describes a property which is chosen from: a surface, a workforce, a consumption, a production, an emission and any combinations thereof.

13. The computer-implemented method (300) according to any one of claims 8 to 12, wherein the environmental parameters are chosen from: air, water, urbanization, biodiversity and any combinations thereof.

14. The computer-implemented method (300) according to any one of claims 8 to 13 wherein the automatic learning comprises a training algorithm which is chosen from: partial least squares regression, linear regression, neural network, decision tree, genetic algorithm, genetic programming, k-nearest neighbors method, radial basis function network, random function, forest, support vector machine, and deep learning.

15. A system (400) for training a machine learning model which is intended to predict, over a predetermined prediction period, at least one environmental pressure score variation parameter associated with the introduction of at least one structure to be built on at least one predetermined geographical area of the Earth, the score variation parameter being representative of the impact of the structure to be built on one or several environmental parameters which characterize the environment in which the predetermined geographical area of the Earth is located, the predetermined geographic area of the Earth comprising a plurality of geographic positions, the system (400) comprising:
- at least one data storage device (410) configured to store instructions for training a machine learning model; and
- at least one processor (420) configured to execute the instructions for implementing a computer-implemented method (300) according to any one of claims 8 to 14.
